# EUROPEAN PATENT SPECIFICATION

(11) **EP 4 337 543 B1**
(45) Date of publication and mention of the grant of the patent: **09.04.2025**
(21) Application number: 22728281.1
(22) Date of filing: 13.05.2022
(51) Int. Cl.: B65B 13/18, G01L 5/04

(54) **DEVICE FOR MEASURING THE TENSIONING OF A STRAPPING, METHOD FOR MEASURING SAID TENSIONING AND STRAPPING MACHINE USING THE AFORESAID MEASURING DEVICE**
VORRICHTUNG ZUR MESSUNG DER SPANNUNG EINER UMREIFUNG, VERFAHREN ZUR MESSUNG DER SPANNUNG UND UMREIFUNGSMASCHINE MIT DIESER MESSVORRICHTUNG
DISPOSITIF DE MESURE DE LA TENSION D'UN CERCLAGE, PROCÉDÉ DE MESURE DE LADITE TENSION ET MACHINE DE CERCLAGE UTILISANT LEDIT DISPOSITIF DE MESURE

(30) Priority: 14.05.2021 IT 202100012491
(43) Date of publication of application: 20.03.2024
(73) Proprietor: Itipack Srl, 36030 Villaverla (VI) (IT)
(72) Inventor: BENETTI, Bruno, 36030 Villaverla (VI) (IT)
(74) Representative: Marchioro, Paolo
(86) International application number: PCT/IB2022/054464
(87) International publication number: WO 2022/238968

(56) References cited:
- EP-A1- 2 803 588
- US-B1- 7 377 213

## Description

The invention concerns a device for measuring at least the tensioning, understood at least as stress and deformation, to which a strapping for packaging objects is subjected.

In the following description, the term tensioning will therefore be intended to mean the set of the parameters of stress, deformation, elongation, breaking load and therefore of efficiency of the welding and of the junction of a strapping that joins together elements and/or objects of any type and size.

The invention also comprises a method for measuring the tensioning using the aforesaid measuring device.

Finally, the invention comprises a strapping machine using the aforesaid device for measuring the tensioning of the strapping applied to the product that said strapping machine produces.

As is well known, strapping machines are packaging machines of various automatic, semi-automatic or manual types that wrap and tightly tighten thin flexible metallic or non-metallic tapes, precisely called straps, around the objects or the products to be packaged.

Depending on the type of packaging, the straps are either wound in direct contact with the products or the objects to be packaged or in direct contact with the packaging containing them.

If the straps that are used are metallic straps, they are tightened into a ring around the elements to be packaged and their ends are first overlapped and then tensioned and finally fixed the one to the other by crimping or by welding. Conversely, if the straps that are used are not metallic straps, their ends are joined either by crimping with the addition of a metallic junction element or by melting.

If the junction is made by welding, the strapping machines are provided with one or more welding torches.

Packaging with strapping is also widely used to package, according to a bundle configuration, elements with predominantly longitudinal development, for example profiles, bars, tubes and similar products, metallic and non-metallic, which in order to be easily stored, handled and transported must be tightly tightened together using usually several annular strappings suitably arranged spaced apart along the longitudinal direction defined by the same elements.

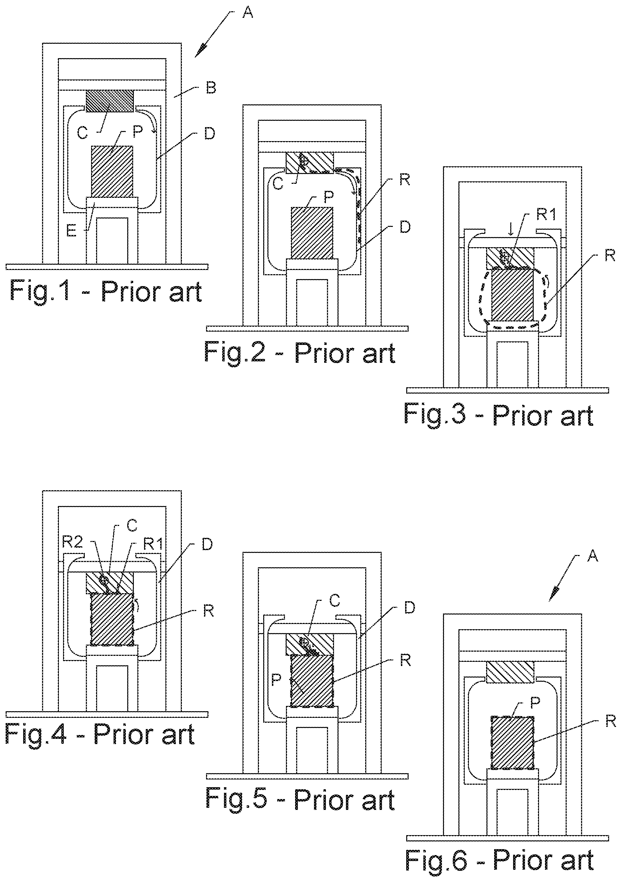

By way of example of the prior art, the strapping of a product is described below with reference to Figures 1 to 6 and using an automatic strapping machine, which in the figures is collectively referred to as **A.**

Obviously, the prior art described is also applicable to any strapping machine of other type, automatic, semi-automatic or manual.

With reference to Figure 1, it can be seen that the strapping machine **A** comprises a framing **B** that supports a strapping head **C,** sliding channels **D** of the strap and a rest plane **E** for the products to be strapped, e.g. a package **P.** The strapping operation involves the execution of the following steps:
- throwing the strap **R** from the strapping head **C** along the sliding channels **D**, as can be seen in Figure 2;
- winding the strap **R** around the package **P** until it returns in the strapping head **C,** blocking it at a point **R1** and bringing the strapping head **C** closer to the package **P**, as can be seen in Figure 3;
- recovering the strap **R** by extracting it from the sliding channels **D**, tensioning it so that it peripherally adheres to the package **P** and then blocking it at a second point **R2**, as can be seen in Figure 4;
- if necessary, reducing the tension of the strap **R** upstream of the point **R1** to reduce the shear stress, cutting the strap **R** and then joining the ends thereof by welding or crimping, as can be seen in Figure 5;
- the strapping head **C** releases the strap and the junction causing a slight loosening of the strap with loss of residual tensioning on the package and then it moves away from the package **P**, as can be seen in Figure 6, until it returns to the initial position in Figure 1 to repeat the strapping cycle.

It is important that the winding, tensioning and welding operations of the ends of the straps are carried out in a workmanlike manner so that, after the binding cycle has been completed, the straps are able to ensure the stability of the element or of the elements that have been strapped.

In particular, in the case of strapping several elements, e.g. of elements with mainly longitudinal development strapped into a bundle, the tensioning of the straps must be adequate to exert on the elements themselves the tightening force that is useful to keep them stably joined into a bundle after packaging.

In addition, the tensioning of the straps must also be adequate to withstand the dynamic thrust that the bundled elements exert on them during the abrupt movements to which the bundled elements are subjected during transport.

The tensioning of the straps must also be adequate to withstand the additional thrust that the bundled elements exert against the straps themselves when stacked on top of each other in warehouses and in the storage facilities.

Finally, when executing the strapping cycle it must be taken into account that, after the tensioning, the cutting and the welding/sealing have been carried out, the welded strap is released onto the package, with consequent loosening of the straps mentioned above, which must be kept as limited as possible in order not to jeopardise the tightness of the strapping.

In known automatic or semi-automatic strapping machines, or in the manual strapping systems, the tensioning of each strap during packaging is achieved by using strapping heads provided with electric motors or hydraulic or pneumatic actuators, and the operator intervenes on means for controlling the aforesaid motors or actuators in order to adjust the tensioning value.

For example, if the strapping head uses brushless type electric motors, the operator intervenes on the torque regulator, whereas if the strapping head is provided with hydraulic or pneumatic actuators, the operator intervenes on the means for adjusting the pressure of the fluid that moves them.

Tensioning adjustment according to the prior art, however, has a number of drawbacks and limitations, which are listed below.

The tensioning adjustment that is carried out at the beginning of a processing is based on the results of the tests of resistance of the welding joint or of crimping of the straps, but this adjustment is then not modified based on the multiple factors that intervene during strapping operations and modify it.

It is understood that this entails a number of acknowledged drawbacks, one of which consists in the fact that during strapping operations different welding conditions of the ends of the straps can take place, with consequent variations in the resistance of the welded junction and, more generally, of all those parameters that determine the welding efficiency.

Another drawback consists in the fact that, according to the prior art, no specific objective criteria are followed to adjust the tensioning of the straps based on the external geometry of the bundle of elements that are strapped together, and this, notoriously, involves variations in the tightening force of the elements that are strapped.

A further drawback consists in the fact that possible geometric differences among the elements that make up the batch of elements to be strapped into a bundle lead to changes in the external shape of the bundles and generate different tightening conditions of the bundles during strapping processing. Other drawbacks occur during the normal use of the strapping machine and depend, for example, on phenomena of normal or excessive wear of the components, incorrect settings, inadequate maintenance, replacement of the strapping band being used, abnormal variations in the supply of the operating fluids to the heads, and others.

Last but not least drawback, as a result of the above mentioned drawbacks, it consists in the fact that it is very difficult to guarantee an optimal and repetitive strapping quality.

EP 2 803 588 A1 discloses a device for measuring the tension of at least one strap wound and strapped around an object.

The aim of the present invention is therefore to eliminate the drawbacks that have been highlighted above.

It is an aim of the present invention to realize a device for measuring the parameters that define the strapping for packaging objects of any type bound together in any geometric configuration, and particularly of elements with predominantly longitudinal development arranged into a bundle.

It is therefore the aim of the invention that the measuring device makes it possible to determine the tensioning of the straps, the term tensioning being understood to mean the set of the parameters of stress, deformation, elongation, breaking load and thus of efficiency of the welding and junction of a strapping that joins together elements and/or objects of any type and size.

In particular, the aim is to determine the tensioning of the straps for packaging elements with predominantly longitudinal development arranged into a bundle. It is a further aim of the invention that the measuring device makes it possible to measure the tensioning, the deformations, the elongations, the breaking loads and the yield strengths of a single stretch of strap with a predetermined length that is sampled from a strap wound into a reel that is used for strapping. It is another aim to realize a method that, using the aforesaid measuring device, allows to measure the strapping parameters, especially the stresses, the deformations, the elongations, the breaking loads and the yield strengths of a strapping that joins together elements and/or objects of any type and size. Not least aim that the measuring device of the invention can be used in any automatic, semi-automatic or manual strapping machine or system. The aims listed are achieved by the measuring device according to claim 1 to which reference will be made, by the measuring method using the aforesaid device and by the strapping machine using the aforesaid measuring device.

Advantageously, the measuring device and the measuring method that uses it allow, compared to the prior art, a significant improvement in the quality of the strapping that a strapping machine produces.

Still advantageously, the measuring device and the measuring method that uses it allow a strapping machine to obtain a constant and more reliable strapping quality compared to the prior art.

The purposes and advantages listed will be better highlighted below during the description of a preferred, but not exclusive, embodiment of the invention which is given with reference to the attached drawings in which:
- Figures 1 to 6 represent a strapping method and system according to the prior art;
- Figures 7 to 9 represent the measuring device of the invention;
- Figures 10 and 11 represent two different views of a strapping machine using the measuring device of the invention;
- Figure 12 represents an enlarged detail of Figure 11 in axonometric view.

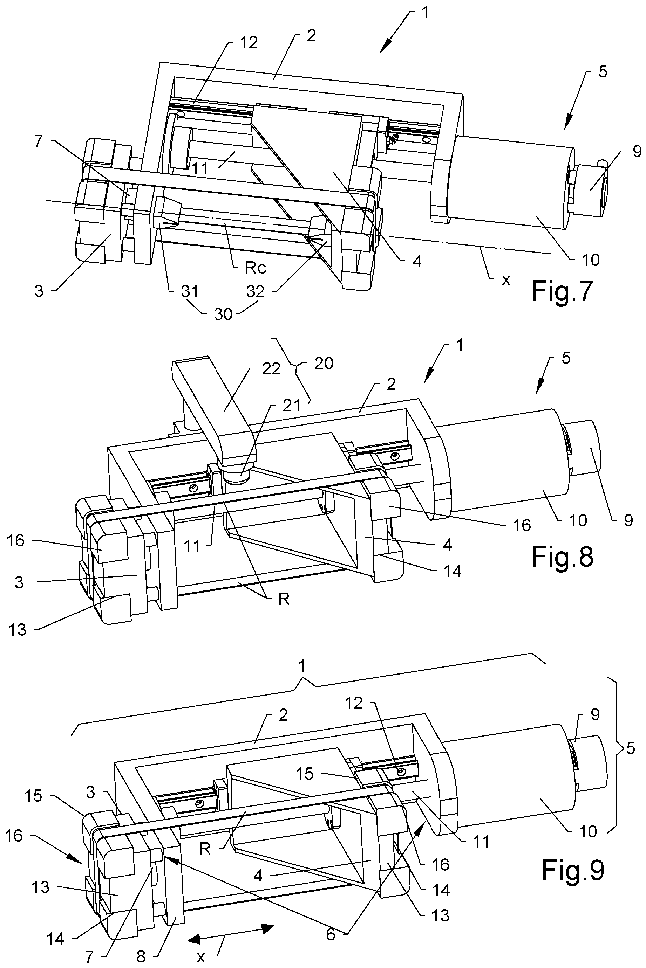

The measuring device of the invention is represented in different views in Figures 7 to 9 where it is collectively referred to with **1.**

The measuring device **1** is used to measure the tensioning, understood at least as the set of the stress, deformation, elongation, breaking load and welding and junction efficiency parameters of at least one strap that packages elements of various kind and that is tightened in direct contact with the elements to be packaged or in contact with the container that houses them.

It is considered appropriate to specify that in the description the term "strapped" may be used to indicate a strap wound and tightened around one or more objects or products.

In the remainder of this description, as has already been mentioned above, the term tensioning will be used to refer to the set of the parameters of stress, deformation, elongation, breaking load and therefore of welding and junction efficiency of a strapping that joins together elements and/or objects of any type and size.

The device of the invention is, however, particularly suitable for measuring the parameters defining the tensioning as defined above of at least one strap that wraps and tightly tightens into a bundle a plurality of elements with predominantly longitudinal development, such as metallic and non-metallic profiles, tubes and bars for various use.

During the following description, reference will therefore be made to the strapping of bundled elements with predominantly longitudinal development, but it is understood that the measuring device of the invention may also be applied to measure the parameters defining the strapping tensioning of elements of any type in terms of geometry, material and product sector to which they belong, possibly also contained in respective packagings.

The measuring device **1** of the invention is essentially a strapping simulator that can be applied to any automatic and semi-automatic strapping machine and also to any strapping device of the manual type.

In the following discussion, the device of the invention is described in its application to a strapping machine of the automatic type provided with an arched strapping head in which, in order to determine the strapping parameters, particularly the tensioning is used which affects the strap during and after strapping and which influences and determines the quality of the strapping that the strapping machine performs.

According to the invention, the measuring device **1,** as can be seen in Figures 7 to 9, comprises a frame **2** that supports a pair of heads that simulate the geometry of the product to be strapped and which comprise a first head 3 and a second head **4** facing each other, spaced apart and opposed that are configured to receive a strap **R** which is wound externally to both according to a ring configuration.

The frame **2** also supports movement means **5** that are configured to mutually displace at least one of the heads **3, 4** according to a straight direction **X** and detection means **6** for detecting at least the stress and deformation values affecting the strap **R** when it is wound outside the heads **3, 4** and when the movement means **5** mutually move the heads **3, 4** away to deform the strap **R** until its breakage.

It is considered appropriate to specify that the movement means can be of any type and therefore electric, fluid or manual.

In addition, these movement means may exert the mutual displacement of the heads even according to several directions.

Computer means, not represented in the figures, also belong to the device, which are operatively connected to the detection means **6** and which comprise storage means in which a computer product is stored and at least one microprocessor which is configured to execute the aforesaid computer product. The aforesaid computer product is configured in such a way that, when it is being processed, it processes the data acquired by said detection means **6** and calculates the values of at least the tensile load and the elongation affecting the strap **R.**

With regard to the detection means **6**, it can be seen in Figures 7 to 9 that they comprise a load cell **7** that is interposed between the first head **3** and a contrasting surface **8** belonging to frame **2** and is configured to detect the values of the tension acting on the strap **R.**

The detection means **6** also comprise an encoder **9** that belongs to the movement means **5** to which the second head **4** is associated and is configured to detect the displacements that the movement means **5** impose on at least one of the heads **3**, **4**.

With regard to the movement means **5**, it can be seen in the figures that they comprise a gear motor unit **10** and a ball recirculating screw **11**, which is connected to the gear motor unit **10** and put into rotation by the same, and to which the second head **4** is coupled.

In another different embodiment, which is not described and represented, the movement means can be connected to both heads in order to put them into mutual movement simultaneously or one with respect to the other.

In addition, between the gear motor unit **10** and the ball recirculating screw **11** there is interposed the encoder **9** which is connected to both the gear motor unit **10**, and to the ball recirculating screw **11.**

It is also noted that the second head **4** is supported by a linear guide **12**, which is fixed to the frame **2** and is configured to define the straight direction **X** of displacement of at least the second head **4** itself.

In another different embodiment that is not described and represented, if both heads can be put into motion, both will be supported by a linear guide.

Other guide means belonging to the prior art may be used as an alternative to the linear guides.

In order to simulate as closely as possible the actual strapping conditions, the first head **3** and the second head **4** are provided with hooking profiles **13** which are configured to removably accommodate the coupling of hooking counter-profiles **14** corresponding to them that belong to shaped caps **15** having the external profile **16** equal to the external profile of the elements with predominantly longitudinal development that are tightened into a bundle by strapping.

In addition, the aforesaid shaped caps **15** will be made of a material whose mechanical characteristics are as similar as possible to those of the material to be strapped so that, during strapping, the operating conditions are as close as possible to the actual strapping conditions.

It is therefore evident that pairs of shaped caps **15** having an external profile **16** that can be conjugated to the external profile of the elements being strapped will be used.

In addition, the detection means **6** preferably also comprise means for measuring the torque applied by the movement means **5** and means (not represented but of a known type) for acquiring the electrical power supply values of the welding machine that welds the ends of the strap **R.**

There will also be a timer (not represented but of a known type) that detects the times for winding, tensioning, welding and releasing the strap **R**, and possibly a time scale for monitoring the detected values over time.

The detection means **6** preferably, but not necessarily, also comprise means for acquiring images **20** of the welding that is carried out in the junction area of the strap **R** and which are schematically represented in Figure 8.

Such image acquisition means **20** comprise an image acquisition device **21**, e.g. a camera, video camera or similar means, associated with a support arm **22** that places the image acquisition means **20** above the strap **R** at the welding.

The device **1** of the invention also comprises a pair of gripping members **30** which can be seen in Figure 7, which are arranged coaxial and opposed to each other according to the straight direction **X** and which comprise a first gripping member **31** fixed to the frame **2** and a second gripping member **32** fixed to the second head **4.**

The ends of a segment of sample strap **Rc** which is put under traction by the second head **4** to detect its tensioning values and in particular the breaking load, the elongation and the yield strength, are fixed to the gripping members **30.**

The sample strap **Rc** consists of a segment of the same strap **R** that is used for strapping in the strapping machine, and the value of the tensile breaking load that is detected on the sample strap **Rc** is used to determine the strapping efficiency value understood as the ratio between the value of the breaking load detected by simulating the strapping between the heads **3, 4** and the value of the breaking load detected on the sample strap **Rc**.

As far as the computer product is concerned, which, as it has been said, is stored in the storage means of the computer means which are not represented in the figures, when it is being processed, it calculates the values:
- of the tensile load and of the elongation affecting the strap **R** during the step of winding and of tension externally to the heads **3**, **4**;
- of the tensile load and of the elongation affecting the strap **R** at the end of the winding and tension step;
- of the time for the winding and tension of the strap **R;**
- of the tensile load and of the elongation affecting the strap **R** in the tension and stretching steps;
- of the time for the welding/junction of the ends of the strap **R;**
- of the tensile load and of the elongation affecting the strap **R** after the welding/junction of the ends thereof and upon release after strapping;
- of the time of the tension loss of the strap **R** after the welding/junction of the ends thereof, before bringing the strap **R** to break;
- of the tensile load and of the elongation of the strap **R** after welding/junction and until the relative breakage;
- of the tensile time of the strap **R** after welding/junction and until the relative breakage;
- of the tensile load and of the elongation of the sample strap **Rc** until the relative breakage;
- of the welding/junction efficiency.

The aforesaid values are made available to the user in a report.

In particular, the detected and calculated values can be marked by means of a printer or similar means on the strap that is applied to the products during the strapping cycle.

These values can also be recorded on labels to be applied to the strapped products, and finally they can also be stored on the computer media of the quality system in order to ensure the traceability of the strappings carried out on the products.

The user, by cross-referencing the qualitative analysis of the strapping with the records indicated in the report, will be able to assess the necessity and/or advisability of carrying out any adjustment interventions on the strapping machine.

The measuring device **1** of the invention can be applied to any automatic or semi-automatic strapping machine, and in general also to any manual strapping system, which will therefore also be an object of the present invention.

Thus, the method for measuring the tensioning of a strap **R** using the measuring device **1** of the invention can be described by reference to any automatic or semi-automatic strapping machine and in general also to any manual strapping system.

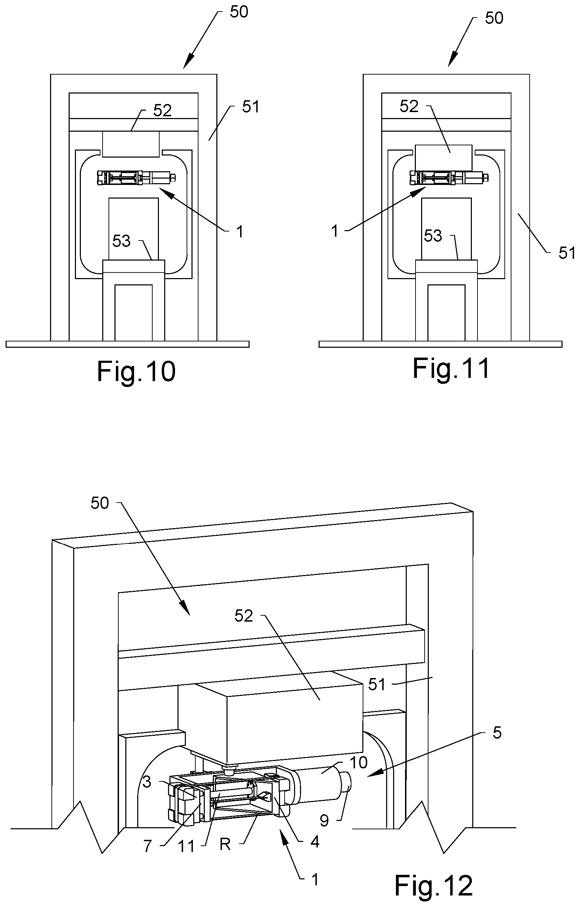

Hereinafter, the measuring method is described with reference to an automatic strapping machine **50** of the arched type, represented in the schematic Figures 10 and 11 and also being an object of the present invention, which comprises a frame **51** with a rest surface **53** for the objects or elements to be strapped, a strapping head **52** supported by the frame **51** and the measuring device **1** of the invention which is associated with support and displacement means of any type, manual or automatic, not represented in the figures, belonging to the frame **51.**

In another different embodiment, the measuring device **1** may be associated with a support structure independent of the frame **51** and will be inserted into the strapping machine **50** or other strapping system in an automatic, semi-automatic or manual manner.

In a further embodiment, the measuring device **1** may be carried by hand by the operator and placed in a suitable position to perform the test.

The support and displacement means, not represented in the figures, support the measuring device **1** which, during the operation of the strapping machine and thus during the strapping operations, remains in a position spaced apart from the strapping head **52**, as can be seen in Figures 10 and 12.

In particular, the measuring device **1** is arranged so as not to hinder the strapping operations of the product and is inserted automatically, semiautomatically or manually into the strapping machine or into the strapping system, as can be seen in Figure 10.

The strapping machine or the strapping system will apply the strap to the measuring device **1,** as can be seen in Figures 11 and 12.

In order to measure the strapping tensioning, the strapping machine **50** is stopped and, after applying to the heads **3** and **4** the shaped caps **15** having the profile that reproduces the external profile of the elements or objects to be strapped, by means of the displacement means the measuring device **1** is displaced in order to move the heads **3** and **4** closer to the strapping head **52** in the condition represented in Figure 11.

It should be noted that, usually, the caps **15,** which as mentioned are interchangeable inserts, are fixed to the heads **3** and **4** and are already set up to simulate the product being strapped by that specific strapping machine. Obviously, if the product to be strapped is changed, the caps **15** are replaced with others having the profile that reproduces the external profile of the new product to be strapped.

Furthermore, as already specified, the geometry and the characteristics of the material with which the caps **15** are made must be chosen appropriately in order to reproduce as closely as possible to reality the conditions under which the strapping of the products or of the objects takes place.

To measure the tensioning, the strapping machine **50** wraps a strap **R** externally to the heads **3, 4** and at the end of the winding the ends of the strap **R** are joined by crimping or welded by means of one or more welding heads, not represented in the figures.

The second head **4** then moves away from the first head **3,** or both mutually if they are both movable, by means of the movement means **5,** and the strap **R** is thus put under traction until the relative breakage.

It is also possible to measure the tensioning of a sample strap **Rc**.

The data acquired by the detection means **6** are then recorded in a report together with the values listed above and calculated by the computer product.

As mentioned above, the measuring device **1** of the invention can be applied to any automatic or semi-automatic strapping machine or to any manual strapping system to measure the characteristics of strapping that the strapping machine produces.

Operationally, at the user's choice, the strapping tensioning measurement can be carried out in the interval between two successive strapping operations or after a discrete number of strapping operations.

Furthermore, the image acquisition means **20** of the junction could compare the junction made with standardized junctions, or with all the junctions previously made, and possibly instruct the computer means to carry out a measurement of the strength of the junction and therefore of the strapping.

On the basis of what has been described, it is understood that the invention achieves the aim of realizing a device for measuring **1** the parameters that define the strapping for packaging objects.

In particular, the measuring device **1** achieves the aim of determining the values of the parameters that define the stress and the deformation of a strapping while packaging objects, and in particular of calculating the tensile load, the elongation, the yield strength and the breaking load affecting the strapping.

Knowing these data makes it possible to keep the strapping operations in a strapping machine under control by making any corrections to the adjustment parameters of the strapping machine itself, which are necessary in order to keep the strapping quality within the standards set by the user.

Finally, the aim is also achieved that the measuring device **1** of the invention is applicable to any automatic or semi-automatic strapping machine or to any manual strapping system, in which case any known strapping machine will be converted into a strapping machine or into a strapping system of the present invention.

In the execution step, modifications may be made to the measuring device of the invention, all of which, if they fall within the scope of the following claims, shall be deemed to be protected by this patent.

## Claims

1. Device for measuring (1) the tensioning of at least one strap wound and strapped around at least one product or one object, **characterized in that** it comprises a frame (2) that supports:
- a first head (3) and a second head (4) facing each other, spaced apart and opposed that are configured to receive a strap (R) that is wound and strapped externally to both said heads (3, 4) according to a ring configuration;
- movement means (5) configured to mutually displace at least one of said heads (3, 4) according to at least one direction (X);
- detection means (6) for detecting at least the stress and deformation data affecting said strap (R) when it is wound and blocked outside said heads (3, 4) and when said movement means mutually move said heads (3, 4) away to deform said strap (R) until the relative breakage;
- computer means operatively connected to said detection means (6) and comprising:
- storage means in which a computer product is stored;
- a microprocessor that is configured to execute said computer product, said computer product, when it is being processed, being configured to process the data acquired by said detection means (6) and to calculate the values at least of the tensile load and of the elongation affecting said strap (R).

2. Measuring device (1) according to claim 1, **characterized in that** said detection means (6) comprise at least one load cell (7) interposed between said first head (3) and a contrasting surface (8) belonging to said frame (2), said load cell (7) being configured to detect the values of the tension acting on said strap (R).

3. Measuring device (1) according to claim 2, **characterized in that** said detection means (6) also comprise at least one encoder (9) belonging to said movement means (5) to which at least said second head (4) is associated, said encoder (9) being configured to detect the displacements that said movement means (5) impose on at least one of said heads (3, 4).

4. Measuring device (1) according to claim 2, **characterized in that** said movement means (5) comprise:
- at least one gear motor unit (10);
- a recirculating ball screw (11) connected to said gear motor unit (10) and put into rotation by the same,
at least said second head (4) being coupled to said recirculating ball screw (11) and said at least one encoder (9) being interposed between said gear motor unit (10) and said recirculating ball screw (11).

5. Measuring device (1) according to any one of the preceding claims, **characterized in that** at least said second head (4) is supported by guide means and is configured to define the respective straight direction (X) of displacement of at least said second head (4).

6. Measuring device (1) according to claim 5, **characterized in that** said guide means comprise at least one linear guide (12) fixed to said frame (2).

7. Measuring device (1) according to any one of the preceding claims, **characterized in that** said first head (3) and said second head (4) have hooking profiles (13) which are configured to removably accommodate the coupling of hooking counter-profiles (14) corresponding to them which belong to shaped caps (15) and which have the external profile (16) equal to the external profile of said elements being strapped.

8. Measuring device (1) according to any one of the preceding claims, **characterized in that** said detection means (6) further comprise at least one timer which detects at least the times for winding, tensioning and welding said strap.

9. Measuring device (1) according to any one of the preceding claims, **characterized in that** said computer product, when it is being processed, calculates the values:
- of the tensile load and of the elongation affecting the strap (R) during the step of winding and of tension externally to said heads (3, 4);
- of the tensile load and of the elongation affecting the strap (R) at the end of said step of winding and of tension;
- of the time for the winding and the tension of said strap (R);
- of the time for welding, crimping or melting the ends of said strap (R);
- of the tensile load and of the elongation affecting said strap (R) after welding, crimping or melting of the ends thereof;
- of the tensile time of said strap (R) until relative breakage after welding, crimping or melting of the ends thereof;
- of the yield strength and of the breaking load of said strap (R),
said values being made available to the user in a report.

10. Measuring device (1) according to claim 9, **characterized by** comprising means for storing and/or displaying said values.

11. Measuring device (1) according to any one of the preceding claims, **characterized in that** said detection means (6) also comprise means for acquiring at least the electrical power supply values of the welding machine that welds the ends of said strap (R).

12. Measuring device (1) according to any one of the preceding claims, **characterized in that** said detection means (6) also comprise image acquisition means (20) of said welding.

13. Method for measuring the tensioning of a strap (R) using the measuring device (1) according to any one of claims 1 to 12, said measuring method being **characterized by** comprising the following operations:
- setting up a strapping machine (50) or a strapping system;
- inserting said measuring device (1) into said strapping machine (50) or into said strapping system in a suitable position so that said first head (3) and said second head (4) are positioned at the strapping head (52) of said strapping machine (50) or of said strapping system;
- applying said shaped caps (15) externally to said heads (3, 4) so as to reproduce the strapping configuration of said elements or objects to be strapped;
- winding a strap (R) externally to said heads (3, 4);
- at the end of winding, welding/joining the ends of said strap (R);
- putting said strap (R) under traction by moving mutually away one with respect to the other or both of said heads (3, 4) until the breakage of said strap;
- recording said values of said tensioning in a report.

14. Strapping machine (50) or strapping system comprising:
- a frame (51);
- a rest surface (53) for the objects or elements to be strapped;
- a strapping head (52), supported by said frame (51), for applying a strap (R) to said objects or items to be strapped,
**characterized by** comprising a device for measuring (1) the tensioning of said strap (R), according to any one of claims 1 to 12.

15. Strapping machine (50) or strapping system according to claim 14, **characterized in that** said measuring device (1) is associated with support and displacement means for the approach/distancing of said measuring device (1) to/from said strapping head (52).

## Patentansprüche

1. Vorrichtung zum Messen (1) der Spannung von mindestens einem Gurt, der um mindestens ein Produkt oder einen Gegenstand gewickelt und verzurrt ist, **dadurch gekennzeichnet, dass** sie einen Rahmen (2) umfasst, der Folgendes trägt:
- einen ersten Kopf (3) und einen zweiten Kopf (4), die einander zugewandt, voneinander beabstandet und einander gegenüberliegend sind und so konfiguriert sind, dass sie einen Gurt (R) aufnehmen können, der gemäß einer Ringkonfiguration auf beide Köpfe (3, 4) gewickelt und außen daran verzurrt ist;
- Bewegungsmittel (5), die so konfiguriert sind, dass sie mindestens einen der Köpfe (3, 4) gemäß mindestens einer Richtung (X) gegeneinander verschieben;
- Erfassungsmittel (6) zum Erfassen mindestens der Spannungs- und Verformungsdaten, die auf den Gurt (R) einwirken, wenn er außen auf die Köpfe (3, 4) gewickelt und blockiert ist und wenn die Bewegungsmittel die Köpfe (3, 4) gegenbezüglich wegbewegen, um den Gurt (R) bis zum relativen Bruch zu verformen;
- Computermittel, die mit den Erfassungsmitteln (6) wirkverbunden sind und Folgendes umfassen:
- Speichermittel, in denen ein Computerprodukt gespeichert ist;
- einen Mikroprozessor, der so konfiguriert ist, dass er das Computerprodukt ausführt,
wobei das Computerprodukt, wenn es verarbeitet wird, so konfiguriert ist, dass es die von den Erfassungsmitteln (6) erfassten Daten verarbeitet und die Werte mindestens der Zugbelastung und der Dehnung berechnet, die auf den Gurt (R) einwirken.

2. Messvorrichtung (1) nach Anspruch 1, **dadurch gekennzeichnet, dass** die Erfassungsmittel (6) mindestens eine Kraftmessdose (7) umfassen, die zwischen dem ersten Kopf (3) und einer zum Rahmen (2) gehörenden Gegenfläche (8) angeordnet ist, wobei die Kraftmessdose (7) so konfiguriert ist, dass sie die Werte der auf den Gurt (R) wirkenden Spannung erfasst.

3. Messvorrichtung (1) nach Anspruch 2, **dadurch gekennzeichnet, dass** die Erfassungmittel (6) auch mindestens einen Encoder (9) umfassen, der zu den Bewegungsmitteln (5) gehört, denen mindestens der zweite Kopf (4) zugeordnet ist, wobei der Encoder (9) so konfiguriert ist, dass er die Verschiebungen erfasst, die die Bewegungsmittel (5) auf mindestens einen der Köpfe (3, 4) ausüben.

4. Messvorrichtung (1) nach Anspruch 2, **dadurch gekennzeichnet, dass** die Bewegungsmittel (5) Folgendes umfassen:
- mindestens eine Getriebemotoreinheit (10);
- eine Kugelumlaufspindel (11), die mit der Getriebemotoreinheit (10) verbunden ist und von dieser in Drehung versetzt wird,
wobei mindestens der zweite Kopf (4) mit der Kugelumlaufspindel (11) gekoppelt ist und der mindestens eine Encoder (9) zwischen der Getriebemotoreinheit (10) und der Kugelumlaufspindel (11) angeordnet ist.

5. Messvorrichtung (1) nach einem der vorstehenden Ansprüche, **dadurch gekennzeichnet, dass** mindestens der zweite Kopf (4) von Führungsmitteln getragen wird und so konfiguriert ist, dass er die jeweilige gerade Richtung (X) der Verschiebung mindestens des zweiten Kopfes (4) definiert.

6. Messvorrichtung (1) nach Anspruch 5, **dadurch gekennzeichnet, dass** die Führungsmittel mindestens eine lineare Führung (12) umfassen, die an dem Rahmen (2) befestigt ist.

7. Messvorrichtung (1) nach einem der vorstehenden Ansprüche, **dadurch gekennzeichnet, dass** der erste Kopf (3) und der zweite Kopf (4) Einhakprofile (13) aufweisen, die so konfiguriert sind, dass sie die Kopplung von ihnen entsprechenden Einhak-Gegenprofilen (14), die zu geformten Kappen (15) gehören und deren Außenprofil (16) gleich dem Außenprofil der zu verzurrenden Elemente ist, abnehmbar aufnehmen können.

8. Messvorrichtung (1) nach einem der vorstehenden Ansprüche, **dadurch gekennzeichnet, dass** die Erfassungsmittel (6) ferner mindestens einen Zeitgeber umfassen, der mindestens die Zeiten für das Aufwickeln, Spannen und Verschweißen des Gurtes erfasst.

9. Messvorrichtung (1) nach einem der vorstehenden Ansprüche, **dadurch gekennzeichnet, dass** das Computerprodukt bei seiner Verarbeitung folgende Werte berechnet:
- der Zugbelastung und der Dehnung, die auf den Gurt (R) während des Aufwickel- und Spannschrittes außen auf die Köpfe (3, 4) einwirken;
- der Zugbelastung und der Dehnung, die auf den Gurt (R) am Ende des Aufwickel- und Spannschrittes einwirken;
- der Zeit für das Aufwickeln und Spannens des Gurtes (R);
- der Zeit für das Verschweißen, Quetschen oder Schmelzen der Enden des Gurtes (R);
- der Zugbelastung und der Dehnung, die auf den Gurt (R) nach dem Verschweißen, Quetschen oder Schmelzen seiner Enden einwirken;
- der Zugzeit des Gurtes (R) bis zum relativen Bruch nach dem Verschweißen, Quetschen oder Schmelzen seiner Enden;
- der Streckgrenze und der Bruchlast des Gurtes (R),
wobei diese Werte dem Benutzer in einem Bericht zur Verfügung gestellt werden.

10. Messvorrichtung (1) nach Anspruch 9, **dadurch gekennzeichnet, dass** sie Mittel zum Speichern und/oder Anzeigen der Werte umfasst.

11. Messvorrichtung (1) nach einem der vorstehenden Ansprüche, **dadurch gekennzeichnet, dass** die Erfassungsmittel (6) auch Mittel umfassen, um mindestens die Werte für die elektrische Energieversorgung der Schweißmaschine zu erfassen, die die Enden des Gurtes (R) verschweißt.

12. Messvorrichtung (1) nach einem der vorstehenden Ansprüche, **dadurch gekennzeichnet, dass** die Erfassungsmittel (6) auch Bilderfassungsmittel (20) der Schweißung umfassen.

13. Verfahren zum Messen der Spannung eines Gurtes (R) unter Verwendung der Messvorrichtung (1) nach einem der Ansprüche 1 bis 12, wobei das Messverfahren **dadurch gekennzeichnet ist, dass** es die folgenden Schritte umfasst:
- Einrichten einer Verzurrungsmaschine (50) oder eines Verzurrungssystems;
- Einsetzen der Messvorrichtung (1) in die Verzurrungsmaschine (50) oder in das Verzurrungssystem in einer geeigneten Position, so dass der erste Kopf (3) und der zweite Kopf (4) am Verzurrungskopf (52) der Verzurrungsmaschine (50) oder des Verzurrungssystems positioniert sind;
- Anbringen der geformten Kappen (15) an der Außenseite der Köpfe (3, 4), um die Verzurrungskonfiguration der zu verzurrenden Elemente oder Gegenstände zu reproduzieren;
- Aufwickeln eines Gurtes (R) außerhalb der Köpfe (3, 4);
- am Ende des Aufwickelns, Verschweißen/Verbinden der Enden des Gurtes (R);
- Unterzugsetzen des Gurtes (R), indem einer der Köpfe in Bezug auf den anderen oder beide Köpfe (3, 4) bis zum Zerreißen des Gurtes voneinander wegbewegt werden;
- Aufzeichnen der Spannwerte in einem Bericht.

14. Verzurrungsmaschine (50) oder Verzurrungssystem, umfassend:
- einen Rahmen (51);
- eine Auflagefläche (53) für die zu verzurrenden Gegenstände oder Elemente;
- einen Verzurrungskopf (52), der von dem Rahmen (51) getragen wird, um ein Gurt (R) an den zu verzurrenden Gegenständen oder Objekten anzubringen,
**dadurch gekennzeichnet, dass** sie eine Vorrichtung zum Messen (1) der Spannung des Gurtes (R) nach einem der Ansprüche 1 bis 12 umfasst.

15. Verzurrungsmaschine (50) oder Verzurrungssystem nach Anspruch 14, **dadurch gekennzeichnet, dass** die Messvorrichtung (1) mit Stütz- und Verschiebungsmitteln für die Annäherung/Beabstandung der Messvorrichtung (1) an/von dem Verzurrungskopf (52) verbunden ist.

## Revendications

1. Dispositif pour mesurer (1) la tension d'au moins une sangle enroulée et sanglée autour d'au moins un produit ou un objet, **caractérisé en ce qu'**il comprend un cadre (2) qui supporte:
- une première tête (3) et une seconde tête (4) se faisant face, espacées et opposées, configurées pour recevoir une sangle (R) enroulée et sanglée extérieurement aux deux têtes (3, 4) susmentionnées selon une configuration en anneau;
- des moyens de mouvement (5) configurés pour déplacer mutuellement au moins l'une desdites têtes (3, 4) selon au moins une direction (X);
- des moyens de détection (6) pour détecter au moins les données de contrainte et de déformation affectant ladite sangle (R) lorsqu'elle est enroulée et bloquée à l'extérieur desdites têtes (3, 4) et lorsque lesdits moyens de mouvement éloignent mutuellement lesdites têtes (3, 4) pour déformer ladite sangle (R) jusqu'à la rupture relative;
- des moyens informatiques reliés de manière opérationnelle auxdits moyens de détection (6) et comprenant:
- un moyen de stockage dans lequel un produit informatique est stocké;
- un microprocesseur configuré pour exécuter ledit produit informatique, ledit produit informatique étant configuré, lors de son traitement, pour traiter les données acquises par ledit moyen de détection (6) et pour calculer les valeurs au moins de la charge de traction et de l'allongement affectant ladite sangle (R).

2. Dispositif de mesure (1) selon la revendication 1, **caractérisé en ce que** lesdits moyens de détection (6) comprennent au moins une cellule de charge (7) interposée entre ladite première tête (3) et une surface contrastée (8) appartenant audit cadre (2), ladite cellule de charge (7) étant configurée pour détecter les valeurs de la tension agissant sur ladite sangle (R).

3. Dispositif de mesure (1) selon la revendication 2, **caractérisé en ce que** lesdits moyens de détection (6) comprennent également au moins un codeur (9) appartenant auxdits moyens de mouvement (5) auxquels est associée au moins ladite seconde tête (4), ledit codeur (9) étant configuré pour détecter les déplacements que lesdits moyens de mouvement (5) imposent à au moins l'une desdites têtes (3, 4).

4. Dispositif de mesure (1) selon la revendication 2, **caractérisé en ce que** lesdits moyens de mouvement (5) comprennent:
- au moins un groupe moto-réducteur (10);
- une vis à billes à recirculation (11) reliée audit groupe moto-réducteur (10) et mise en rotation par celui-ci,
au moins ladite seconde tête (4) étant couplée à ladite vis à billes à recirculation (11) et ledit au moins un codeur (9) étant interposé entre ledit groupe moto-réducteur (10) et ladite vis à billes à recirculation (11).

5. Dispositif de mesure (1) selon l'une quelconque des revendications précédentes, **caractérisé en ce qu'**au moins ladite seconde tête (4) est supportée par des moyens de guidage et est configurée pour définir la direction droite respective (X) de déplacement d'au moins ladite seconde tête (4).

6. Dispositif de mesure (1) selon la revendication 5, **caractérisé en ce que** lesdits moyens de guidage comprennent au moins un guide linéaire (12) fixé audit cadre (2).

7. Dispositif de mesure (1) selon l'une quelconque des revendications précédentes, **caractérisé en ce que** ladite première tête (3) et ladite seconde tête (4) présentent des profils d'accrochage (13) configurés pour accueillir de manière amovible le couplage de contre-profils d'accrochage (14) leur correspondant qui appartiennent à des capuchons façonnés (15) et dont le profil extérieur (16) est égal au profil extérieur desdits éléments à sangler.

8. Dispositif de mesure (1) selon l'une quelconque des revendications précédentes, **caractérisé en ce que** lesdits moyens de détection (6) comprennent en outre au moins une minuterie qui détecte au moins les temps d'enroulement, de tension et de soudure de ladite sangle.

9. Dispositif de mesure (1) selon l'une quelconque des revendications précédentes, **caractérisé en ce que** ledit produit informatique, lors de son traitement, calcule les valeurs:
- de la charge de traction et de l'allongement affectant la sangle (R) au cours de l'étape d'enroulement et de tension extérieure auxdites têtes (3, 4);
- de la charge de traction et de l'allongement affectant la sangle (R) à la fin de ladite étape d'enroulement et de tension;
- du temps d'enroulement et de la tension de ladite sangle (R);
- du temps pour souder, sertir ou fondre les extrémités de ladite sangle (R);
- de la charge de traction et de l'allongement affectant ladite sangle (R) après soudage, sertissage ou fusion de ses extrémités;
- de la durée de traction de ladite sangle (R) jusqu'à la rupture relative après soudage, sertissage ou fusion de ses extrémités;
- de la limite d'élasticité et de la charge de rupture de ladite sangle (R),
ces valeurs étant mises à la disposition de l'utilisateur dans un rapport.

10. Dispositif de mesure (1) selon la revendication 9, **caractérisé par** la présence de moyens de stockage et/ou d'affichage desdits valeurs.

11. Dispositif de mesure (1) selon l'une quelconque des revendications précédentes, **caractérisé en ce que** lesdits moyens de détection (6) comprennent également des moyens pour acquérir au moins les valeurs d'alimentation électrique de la machine à souder qui soude les extrémités de ladite sangle (R).

12. Dispositif de mesure (1) selon l'une quelconque des revendications précédentes, **caractérisé en ce que** lesdits moyens de détection (6) comprennent également des moyens d'acquisition d'images (20) dudit soudage.

13. Procédé de mesure de la tension d'une sangle (R) à l'aide du dispositif de mesure (1) selon l'une quelconque des revendications 1 à 12, ledit procédé de mesure étant **caractérisé en ce qu'**il comprend les opérations suivantes:
- mise en place d'une machine à sangler (50) ou d'un système de sanglage;
- insertion dudit dispositif de mesure (1) dans ladite machine à sangler (50) ou dans ledit système de sanglage dans une position appropriée de sorte que ladite première tête (3) et ladite seconde tête (4) soient positionnées au niveau de la tête de sanglage (52) de ladite machine à sangler (50) ou dudit système de sanglage;
- application desdits capuchons façonnés (15) à l'extérieur desdites têtes (3, 4) de manière à reproduire la configuration de sanglage desdits éléments ou objets à sangler;
- enroulement d'une sangle (R) à l'extérieur desdites têtes (3, 4);
- à la fin de l'enroulement, soudage/assemblage des extrémités de ladite sangle (R);
- mise en traction de ladite sangle (R) par éloignement mutuel de l'une par rapport à l'autre ou des deux têtes (3, 4) susmentionnées jusqu'à la rupture de ladite sangle;
- enregistrement desdits valeurs de ladite tension dans un rapport.

14. Machine à sangler (50) ou système de sanglage comprenant:
- un cadre (51);
- une surface d'appui (53) pour les objets ou éléments à sangler;
- une tête de sanglage (52), supportée par ledit cadre (51), pour appliquer une sangle (R) sur lesdits objets ou articles à sangler,
**caractérisé par** le fait de comprendre un dispositif de mesure (1) de la tension de ladite sangle (R), selon l'une quelconque des revendications 1 à 12.

15. Machine à sangler (50) ou système de sanglage selon la revendication 14, **caractérisé en ce que** ledit dispositif de mesure (1) est associé à des moyens de support et de déplacement pour l'approche/ l'éloignement dudit dispositif de mesure (1) par rapport à ladite tête de sanglage (52).
